Europäisches Patentamt

European Patent Office

Office européen des brevets

(11) Publication number: **0 514 773 A2**

# EUROPEAN PATENT APPLICATION

(21) Application number: **92108162.6**

(22) Date of filing: **14.05.92**

(51) Int. Cl.⁵: **G11B 7/085**

(30) Priority: **20.05.91 JP 114648/91**

(43) Date of publication of application:
**25.11.92 Bulletin 92/48**

(84) Designated Contracting States:
**DE FR**

(71) Applicant: **Kabushiki Kaisha Toshiba
72, Horikawa-cho Saiwai-ku
Kawasaki-shi(JP)**

(72) Inventor: **Kasahara, Akihiro, c/o Int. Prop. Div.
K.K.Toshiba
1-1 Shibaura 1-chome, Minato-ku
Tokyo 105(JP)**
Inventor: **Seo, Naobumi, c/o Int. Prop. Div. K.K.
Toshiba
1-1 Shibaura 1-chome, Minato-ku
Tokyo 105(JP)**

(74) Representative: **Blumbach Weser Bergen
Kramer Zwirner Hoffmann Patentanwälte
Radeckestrasse 43
W-8000 München 60(DE)**

(54) Apparatus for optically processing data.

(57) In an apparatus for optically processing data, an optical head (13) for applying a light beam on a rotating optical disk is moved along a radial direction of the optical disk and a light beam reflected from the optical disk is defeated by a photodetector having detecting regions. Detection signals from the detecting regions are added and substrated each other so that difference and sum signals are generated. The signals are converted into binary signals in binary circuit (17, 18) and the binary sum signal is corrected by a correction circuit (19). The corrected sum signal and the difference signal are compared by a direction detection circuit (20) so that a moving direction signal indicating a moving and is supplied to a pulse generator (22) direction of the optical head is generated from the detection circuit (20) and a pulse signal indicating a moving speed of the optical head (13) is generated from the pulse generator (22) and is counted by a counter (23).

FIG. 4

The present invention relates to a data processing apparatus for optically processing data, and more specifically to an optical disk apparatus for retrieving data recorded on a data recording medium, for example, an optical disk.

As known, optical disks used as data recording media in data processing apparatus for optically processing data, i.e. optical disk apparatus, have a tracking guide in the form of a spiral groove or coaxial grooves on each of the optical disks, and a light beam is focused on the disks by a objective lens. In a tracking guide, there is formed a recording region such as pits, a opto-magnetic region in which magnetic characteristic is varied, and a metal region in which the state of a metal is shifted. In this recording region, data is recorded, or data is retrieved therefrom.

Conventionally, data is written into a recording region on a track formed on an optical disk, and to read out the data therefrom, an optical spot is formed on the tracking guide. In other words, tracking control in which a tracking guide is traced by a light beam is carried out. Further, to record data in the recording region of a specific tracking guide, or retrieve data therefrom, the desired track is sought by moving the objective lens in the radial direction of the disk. Thus, a specific tracking guide is accessed to perform an access control. During this access operation, light beams passing through the objective lens move across the tracks.

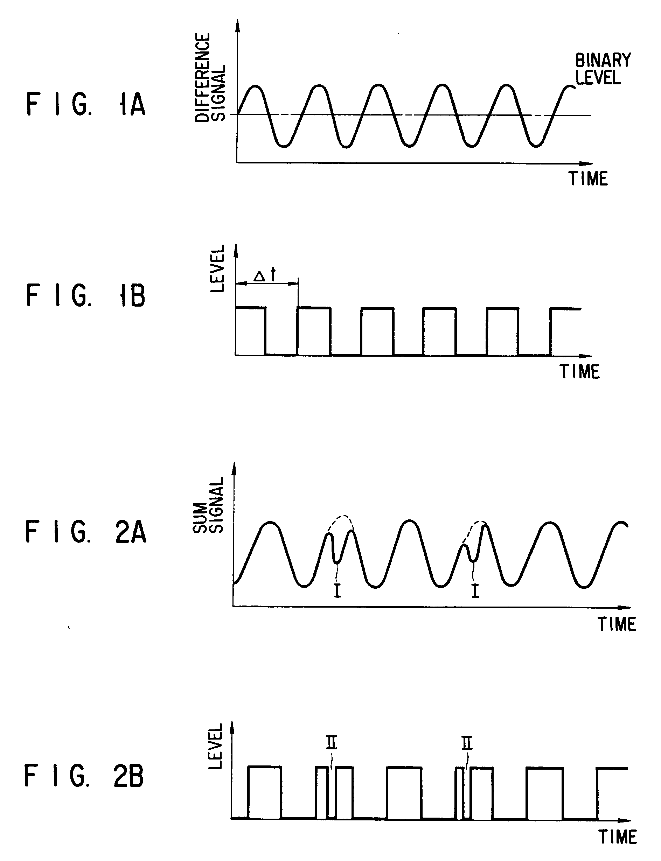

In the tracking control and access control processes, a light beam reflected from the optical disk is guided by the objective lens to an optical detector having two detecting regions, where the beam is detected. As is well-known, a light beam contains the image data of a tracking guide, and the image of the tracking data is formed on the optical detector. Therefore, if the detection signals from the two detecting regions are equal to each other, the light beam traces the tracking guide. More specifically, in the tracking control process, fine movement of the objective lens is carried out based on the difference between the detection signals output from the two detecting regions of the optical detector. Meanwhile, in the access control process, each time a light beam crosses a tracking guide, the intensity of the light beam varies. Therefore, the detection signals output from the two detecting regions of the detector are added together, and the added signal is used for controlling the movement of the objective lens. The moving speed of the objective lens during the access control process can be obtained from the binary difference signal as shown in Fig. 1B, which is generated from the difference signal shown in Fig. 1A converted into a binary signal at a predetermined level. More specifically, the interval $\Delta t$ between binary difference signals is measured by a clock, and the inverse number of this measured value is in fact the moving speed.

However, the above-described method of calculating a speed entails the following problem. Detection of the speed according to this method is sometimes too slow, especially during low-speed movement, to detect the moving direction of the objective lens. In a case where the moving direction cannot be detected, the lens may not be moved accurately to a desired track. In other words, while moving the objective lens in the direction of the outer circumference of the optical disk at a low speed, if the region on the optical disk is moved similarly in the outer circumferential direction thereof faster than the objective lens due to the eccentricity of the disk, it can be said that the objective lens is moving toward in the inner circumferential direction of the disk relative to the region of the optical disk. That is, despite the fact that the objective lens is moving in the outer circumferential direction of the disk, the relative speed of the objective lens with respect to the optical lens may be temporarily reversed. This is the reason why not only the interval between the pulses, but also the relative movement between the optical disk and the objective lens, i.e. optical spot, must be detected.

In consideration of the above, a direction detecting algorithm has been proposed as a detection method of accurately detecting the moving direction of the objective lens moving at a low speed. With the proposed algorithm, the moving speed is detected from not only the difference signal, but also the sum signal having a phase different from that of the difference signal, and the direction of movement is detected from the difference between the sum signal and difference signal in phase. According to this method, in the case where the region on the optical disk is moving in the opposite direction to the moving direction of the objective lens, the number of the moving tracks which the light beam is supposed to cross is reduced, and the number of the tracks to accurately cross is detected; therefore the speed is accurately controlled.

However, the algorithm proposed here includes a problem described below, and therefore has not been accepted as of a practical use.

As shown in Fig. 2, the sum signal may be disturbed such that the level of the signal is varied as indicated by letter I by a block prehead in which sector data is prerecorded on a data track. Generally, a block prehead is formed as a prepit, an actual hole, and when a light beam is focused in the block prehead, the level of the reflection beam is lowered, reducing the output of the sum signal. Consequently, as can be seen in Fig. 2B, the binary sum signal, obtained by converting the sum signal shown in Fig. 2A into binary, is disturbed as indicated by symbol II, and these disturbances appear as abnormality in detection of the speed and direction. As a result, the access control operation is affected and disturbed.

As explained, in the conventional access control, since the light spot passing through the block prehead portion affects the sum signal, the seek operation cannot be accurately performed.

The present invention has been proposed to solve the above-mentioned problems and the purpose thereof is to provide an optical data processing apparatus in which the influence of sector data on a sum signal can be eliminated to achieve a highly accurate speed detection, thereby enabling an accurate seek operation.

According to the present invention, there is provided an apparatus for processing data optically retrieved from a recording medium having a tracking guide on which prepits as address data are preformed, comprising:

focusing means for focusing a light beam on a recording medium and transmitting the light beam reflecting from the recording medium;

moving means for linearly moving focusing means such that the light beam transmitting the focusing means crosses a tracking guide;

detecting means for detecting the light beam output from the focusing means, the detecting means including first and second detecting areas, which generating first and second signals, respectively, arranged such that these areas are traversed by an image of tracking guide when the focusing means is moved;

subtracting and adding means for generating a difference signal corresponding to a difference between the first and second signals, and a sum signal corresponding to a sum of the first and second;

correcting means for generating a correction sum signal obtained by correcting the sum signal in accordance with the difference signal, a level of this sum signal being held for a predetermined time period so as to mask components corresponding to the prepits contained in the sum signal; and

detecting means for detecting a first moving speed in a low-speed region where the focusing means is moved at a low speed by the moving means in accordance with the difference signal and the corrected sum signal, and for detecting a second moving speed in a high-speed region where the focusing means is moved at a relatively high speed by the moving means in accordance with the difference signal.

This invention can be more fully understood from the following detailed description when taken in conjunction with the accompanying drawings, in which:

Fig. 1A shows a difference signal detected for access control in a conventional optical data processing apparatus, and Fig. 1B is a diagram of the waveform of the binary signal obtained by converting the difference signal into binary system.

Fig. 2A shows a sum signal detected for access control in a conventional optical data processing apparatus, and Fig. 2B is a diagram of the waveform of the binary signal obtained by converting the sum signal into binary system.

Fig. 3 is a block diagram showing an optical data processing apparatus according to an embodiment of the present invention.

Fig. 4 is a schematic block diagram of the access controller shown in Fig. 3.

Figs. 5A and 5B are timing charts showing binary difference and sum signals obtained by converting difference and sum signals output from adder and subtracter into binary system, respectively.

Figs. 6A and 6B are timing charts showing binary difference and sum signals obtained by converting difference and sum signals output from adder and subtracter into binary system, respectively, and these timing charts are designed to illustrate an influence of the block prehead.

Fig. 7 is a block diagram schematically showing the sum signal correction circuit shown in Fig. 4, and this Fig. 7 is also a timing chart of the direction detecting operation in the case where the light spot is moved in the " + " direction.

Figs. 8A and 8B are timing charts showing binary difference and sum signals obtained by converting difference and sum signals output from the adder and subtracter at a different timing from the case shown in Figs. 5A and 5B, into binary system, respectively.

Figs. 9A to 9D are timing charts of binary difference and sum signals (9A and 9B, respectively), and of pulses generated at rise and fall of the binary difference and sum signals, (9C and 9D, respectively).

Figs. 10A and 10B are timing charts showing binary difference sum signals.

Fig. 10C is a timing chart designed to illustrate the correction of a sum signal according to another embodiment of the invention.

The following is an explanation of an embodiment of the optical data processing apparatus according to the present invention with reference to the accompanying drawings.

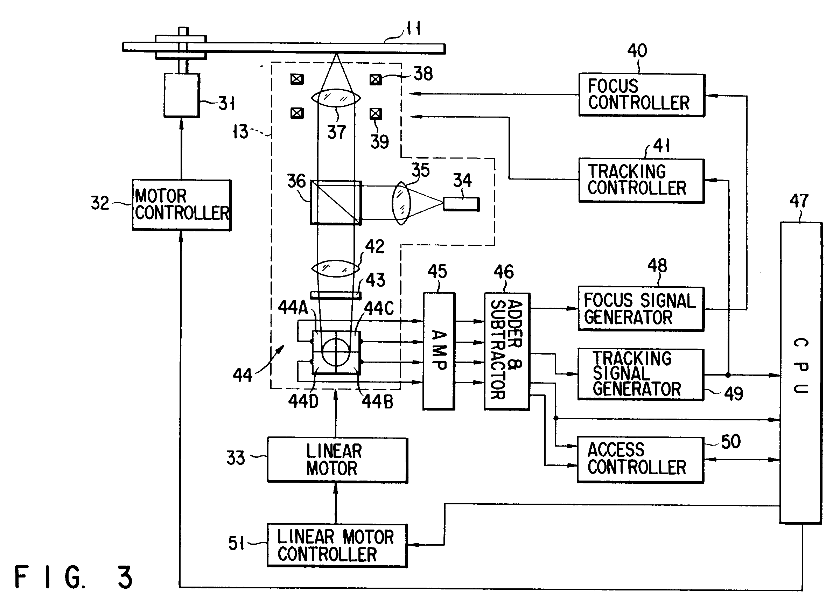

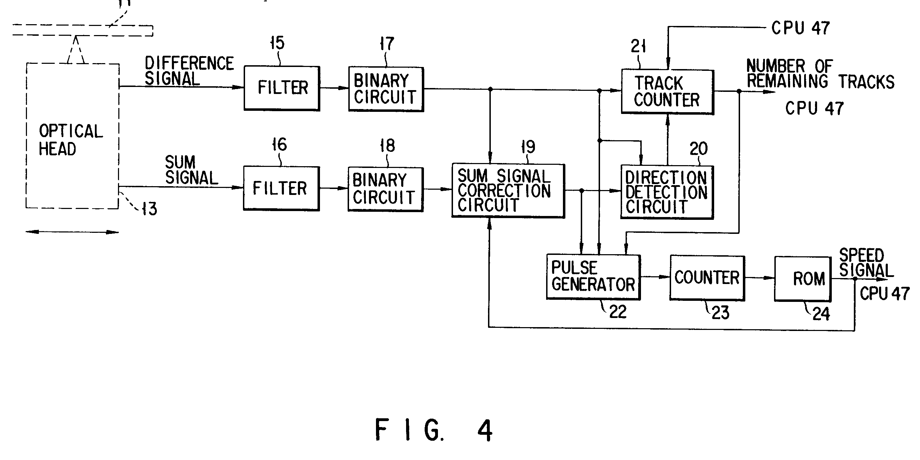

Fig. 3 is a block diagram of an optical data processing apparatus according to the present invention, and Fig. 4 is a block diagram of access controller of the processing apparatus shown in Fig. 3. As can be seen in this figure, an optical disk 11 is rotated by a motor 31, which is further controlled by a motor controller 32, such that the optical disk rotates, for example, at a constant speed. A spiral groove or coaxial grooves are formed on the optical disk 11 as a tracking guide-(s). On the tracking guide, prerecorded are block preheads in the form of prepits as address data including sector address and track address for designating a recording region, at a predetermined interval.

Below the optical disk 11, located is an optical head 13 movable in the radial direction of the disk 11 by means of a linear motor 33. In this optical head 13, laser beam emitted from a semiconductor laser 34 is collimated by a collimator lens 35, and directed to a beam splitter 36. The beam reflected on the beam splitter 36 is focused on the optical disk 11 by an objective lens 37 to make a light spot on the disk. Using the light beam, data is optically retrieved from the optical disk 11, or recorded thereon. The optical head 13 is supported such that it can be moved in the radial direction of the optical disk 11 along the optical axis of the head by a focus coil 38 and a tracking coil 39.

The focus coil 38 operates in response to a drive signal from focus controller 40 so as to keep the objective lens 37 in a focal state at all times. In the focal state, the laser beam output from the objective lens 37 is focused on the optical disk 11 to form the smallest light spot thereon. In a similar manner, the tracking coil 39 operates in response to a drive signal from a tracking controller 41 to maintain the objective lens 37 in a tracking state. In this tracking state, tracking guides on the optical disk 11 are accurately traced by a laser beam.

The laser beam reflected from the optical disk 11 is directed to a condenser lens 42 via the objective lens 37 and the beam splitter 36. The laser beam converged by the condenser lens 42 is irradiated on an optical detector 44 via a cylindrical lens 43. The condenser lens 42 and the cylindrical lens 43 constitute a so-called astigmatism lens system, which converts the laser beam into an astigmatic beam. Consequently, when the objective lens 37 is displaced from a focus state to a defocus state, the shape of the beam spot formed on the optical detector 44 by the laser beam varies from a circle to ellipse. The optical detector 44 for detecting change in shape of a beam spot has four detecting regions 44A-44D. This focus detection method is well-known as so-called astigmatism method, and therefore a detailed explanation thereof is omitted. It should be also pointed out here that other focus detection methods, for example, a knife edge method can be also employed in place of this astigmatism method.

In the detection regions 44A-44D of the optical detector 44, the image of a tracking guide is formed as a dark portion, and shifting of this dark portion is detected to judge whether or not a laser beam has crossed the tracking guide. Further, whether or not the laser beam is tracing tracking guides is known by detecting differences between detection signals output from the detection regions 44A-44D.

Detection signals output from the detection regions 44A-44D are amplified by an amplifier 45, and input to an adder/subtracter 46. The adder/subtracter 46 adds up all the detection signals from the detection regions 44A-44D, and the sum signal obtained is input to a CPU 47 as a retrieval signal, after being A/D converted. Detection signals from the detection regions 44A and 44B, and those from the regions 44C and 44D are added up separately, and each of the sum signals obtained is applied to a focus signal generator 48. Difference obtained by subtracting one from the other is applied from the focus signal generator 48 to a focus controller 40 as a focus signal. When the objective lens 37 is shifted from the focus state to the defocus state, the beam spots on the detection regions 44A-44D are deformed from circles to ellipses. The sum signal of signals from the detection regions 44A and 44B and that of the regions 44C and 44D are compared with each other to detect change of the beam spots on the detection regions 44A-44D in shape. Then, the focus controller 40 operates in response to a focus signal so as to maintain the objective lens in the focus state.

Meanwhile, detection signals from the detection regions 44A and 44D, and those from the regions 44B and 44C are added up separately, and each of the sum signals obtained is applied to a tracking signal generator 49. Each of difference signals obtained by subtracting one from the other is applied to a tracking controller 41 and the CPU 47 as a tracking signal. When the objective lens 37 is held in the focus state, tracking guide image or images are formed in the beam spots on the detection regions 44A-44D, and the tracking guides are followed by a laser beam as long as these images are located on the center axes of the detection regions 44A-44D. The sum signal of the detection regions 44A and 44D and that of the regions 44B and 44C are compared with each other to detect shifting of the tracking guide images in the beam spots on the detection regions 44A-44D in shape. Thus, the difference obtained by subtracting the sum signal of the detection regions 44A and 44D, from that of the regions 44B and 44C is generated from a tracking signal generator 49 as a tracking signal, and supplied to the CPU 47 and the tracking controller 41. The tracking controller 41 operates in response to a tracking signal so as to drive the objective lens 37 such that a light beam from the objective lens 37 accurately trace tracking guides.

A difference signal obtained from subtracting the sum signal of signals from the detection regions 44A and 44D, from that of the detection regions 44B and 44C, and the sum signal of the signals from the detection regions 44A-44D are supplied to an access controller 50 to measure the moving speed of the optical head 13 controlled by the linear motor 33, and to count the number of tracking guides which a light beam output from the optical head 13 is supposed to cross. Thus, a speed signal corresponding to a moving speed, and a remaining count signal corresponding to the number of tracking guides to be crossed are input to the CPU 47. The CPU 47 calculates out a motor control signal based on a speed signal and remaining count signal output from the access controller 50, and a tracking signal from the tracking signal generator 49, and this motor control signal is supplied to a linear motor controller 51. Therefore, the linear motor controller 51 supplies a drive control signal to a linear motor 33 in accordance with a motor control signal to move the optical head 13 to the most appropriate position.

The following is an explanation of access controller 50 with reference to Fig. 4.

When the signal of a condition regarding data to be retrieved is input from an input device, for example, a keyboard, the condition is decoded in the CPU 47 to decide which tracking guide is to be selected. Then, the difference between the tracking address of the tracking guide presently retrieved by the optical head, and the tracking address of the tracking guide to be retrieved, is calculated to determine the number of tracking guides which the laser beam crosses. The number of tracking guides obtained is supplied to a track counter 21 of the access controller 50 from the CPU 47, to be set in the counter. When a control signal for start of movement of the lens is input to the linear motor controller 51 from the CPU 47, the linear motor 33 is driven by the linear motor controller 51, and accordingly, the optical head 13 starts to move in the radial direction of the optical disk 11.

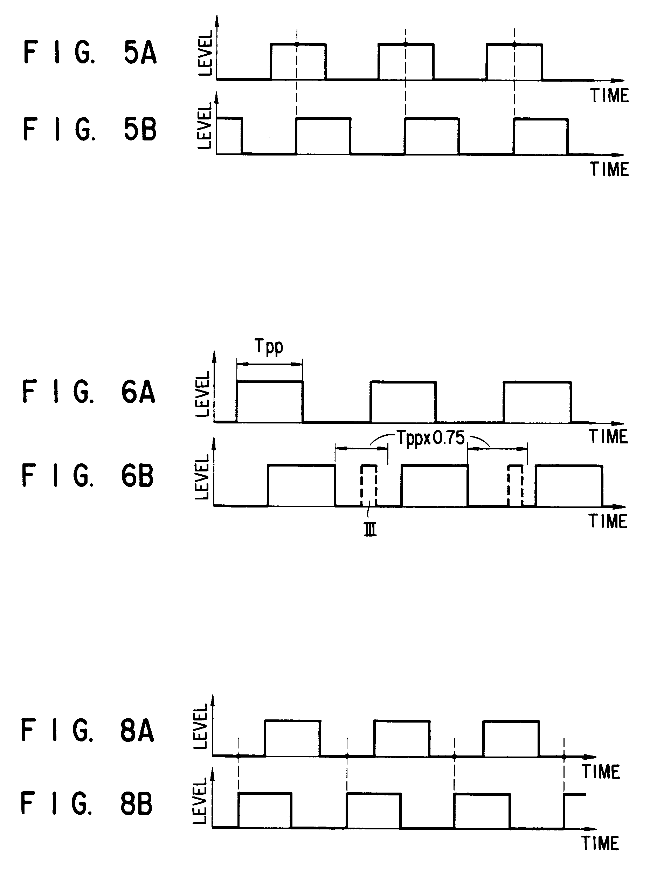

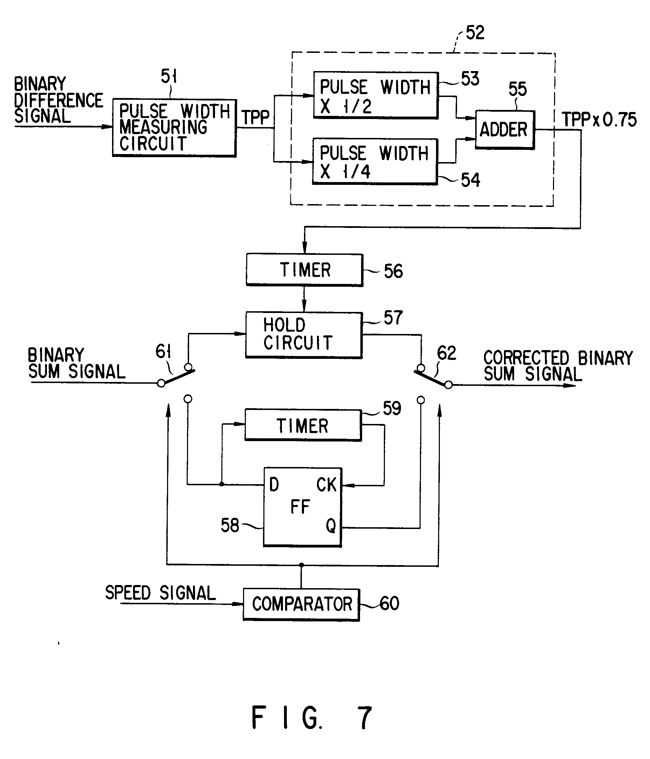

At the beginning of the movement of the optical head 13, a difference signal and a sum signal are supplied from the access controller 50 from the adder/subtracter 46. In the access controller 50, the difference and sum signals pass through filters 15 and 16, respectively, where the high frequency noises of the signals are removed, and then the signals are converted into binary signals by binary circuits 17 and 18, respectively, as shown in Figs. 5A and 5B. A difference signal converted into binary signal, such as shown in Fig. 5A, is supplied to the track counter 21, and the track number already set therein is counted down based on the difference signal supplied thereto. The remaining count signal, which is the count on the track counter 21 after the countdown, is then input to the CPU 47 as a remaining number of tracks. A sum signal converted into binary system, as shown in Fig. 5B, is sent to a sum signal correction circuit 19, where noise created on the binary sum signal due to the influence to the block prehead is removed, and thus the waveform of the binary sum signal is corrected. In this sum signal correction circuit 19, the pulse width of each binary difference signal, such as shown in Fig. 6A, is measured one after another, and the level of the fall of a sum signal is held for the time period of 75% of that for the pulse width $T_{pp}$ of a binary difference signal measured as above, immediately before the fall of the sum signal. In other words, even if a binary sum signal falls, an output of a binary circuit 18 is masked for the time period of 75% of that for the pulse width $T_{pp}$ of a binary difference signal from the fall of the binary sum signal, and noise components, indicated by symbol III in Fig. 6B, created by the block prehead, are masked. The reason why the time period for masking a binary sum signals is set to be 75% of the pulse width $T_{pp}$ of the binary sum signal is that it is easy to calculate and therefore constitution of an actual logic circuit can be facilitated, and an time period enough to remove the influence of the block prehead can be obtained.

The sum signal correction circuit 19 is formed as shown in Fig. 7 in reality. As can be seen in Fig. 7, a binary difference signal is input to a pulse width measuring circuit 51 for measuring the pulse width $T_{pp}$ of the signal. The signal of the measured pulse width is supplied to an operation circuit 52, in which the pulse width is multiplied by 1/2 and 1/4 as indicated by numerals 53 and 54 respectively, and the obtained values are added up as indicated by numeral 55. Accordingly, the operation circuit 52 outputs a signal obtained by multiplying the coefficient of 0.75 to a pulse width. In response to this output signal, a timer 56 starts to operate, and a binary sum signal input to a hold circuit 57 via a switch 61 is held for the time period of 75% of the pulse width $T_{pp}$ of the binary difference signal at the fall of the sum signal. Thus, the corrected binary sum signal is output from a switch 62. The switches 61 and 62 operate in accordance with the moving speed of the optical head 13. If the optical head 13 is moved at a slow speed, and the speed is variously changed, the pulse width $T_{pp}$ of a binary difference signal is varied. Consequently, the switches 61 and 62 are connected to the hold circuit 56. In contrast, if the optical head 13 is moved at a high constant speed, the pulse width $T_{pp}$ of a binary difference signal is constant; therefore the switches 61 and 62 are connected to a flip-flop 58. The speed signal corresponding to a moving speed of the optical head 13 is input to a comparison circuit 60, in which an input speed signal is compared with a reference speed. As mentioned before, if the moving speed is lower than the reference speed, the switches 61 and 62 are connected to the hold circuit 56, whereas if the speed is higher than the reference speed, the switches 61 and 62 are connected to the flip-flop 58. When the moving speed is higher than the reference speed, a binary sum signal is input to the flip-flop 58 via the switch 61. Upon fall of the binary sum signal, a timer 59, which is set to the time period of 75% of the pulse width $T_{pp}$ of the binary difference signal, operates such that the binary sum signal, the level of which is suppressed to that of the fall of the sum signal only for the set time period, from the flip-flop 58. Thus, even if a moving speed is higher than the reference speed, a corrected binary sum signal is output via the switch 62.

This binary sum signal is supplied to a direction detecting circuit 20, to which a binary difference signal is also input. In the direction detecting circuit 20, the moving direction of the optical head 13 is detected by holding the binary sum signal in synchronously with the rise or fall of the corrected binary sum signal. As can be understood from comparison between Fig. 5A and Fig. 5B, the binary sum and difference signals are out of phase always by $90°$, and therefore the phase difference therebetween is $90°$. Further, when the optical head 13 is moving toward the center of the optical disk 11, the phase of the binary difference signal proceeds ahead of the binary sum signal as can be seen in Figs. 5A and 5B, whereas when the optical head 13 is moving away from the center of the optical disk 11, the phase of the binary difference signal proceeds behind the binary sum signal. Therefore, in the case where the binary difference signal is held at the rise of the binary sum signal, the signal is held at a high level when the optical head 13 is moving toward the center of the optical disk 11 as shown in Figs. 5A and 5B, whereas the signal is held at a low level when the optical head 13 is moving away from the center of the optical disk 11 as shown in Figs. 8A and 8B. The direction signal of the high or low level is supplied from the direction detector 20 to the track counter 21, where binary difference signals are counted in accordance with this direction signal, so as to increase or decrease the count of the counter. Although the binary difference signal is held at the level of the rise or fall of the binary sum signal in the above-described embodiment, it would be also possible that the binary sum signal is held at the level of the rise or fall of the binary difference signal.

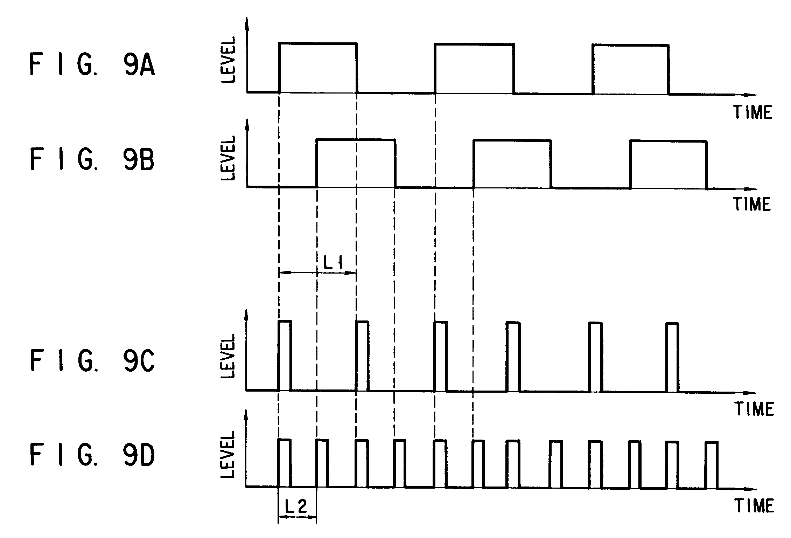

The binary sum and difference signals are supplied to a pulse generator 222, to which the remaining track signal is supplied from the track counter 21, and the pulse generator operates on either of two modes based on the remaining track signal. More specifically, the pulse generator 22 selects one of the high-speed and low-speed modes in accordance with the remaining track signal, which is coded for the number of tracks remaining. The reason why either one of the high-, and low-speed modes is selected is that the target speed in speed control is determined based on the number of tracks remaining, and the smaller the number of remaining tracks, the slower the target speed determined. In the case where the number of remaining tracks is smaller than a predetermined value, the moving speed of the optical head 13 should be kept at low, whereas the number is larger than the predetermined value, the moving speed should be kept at high. The pulse generator 22, when the high-speed mode is selected, generates pulses as shown in Fig. 9C at the rise and fall of the difference signal shown in Fig. 9A, whereas when the low-speed mode is selected, generates pulses as shown in Fig. 9D at the rise and fall of the difference signal shown in Fig. 9B.

Pulses generated from the pulse generator 22 is supplied to the counter 23, where the interval between the pulses is measured by a clock signal generated in the counter. At the high-speed mode, the interval L1 between the pulses shown in Fig. 9C is measured, whereas at the low-speed mode, the interval L2 of the pulses shown in Fig. 9D is measured. The results are supplied to a ROM 24 as count signals. In this ROM 24, the speed signal corresponding to the inverse of a count value (measured value), which also indicates an address, is read out from the table, and is supplied to the CPU 47 and the sum signal correction circuit 19. At the low-speed mode, a speed signal, which is the inverse of the time period required for passing through the 1/4 of a whole track, is output from the ROM 24, whereas at the high-speed mode, a speed signal, which is the inverse of the time period required for passing through a whole track, is output from the ROM 24. For these outputs from the ROM 24, there is provided a speed correction circuit for correcting a speed by giving an appropriate gain to the outputs in a circuit at a rear stage (not shown). It should be noted here that the appropriate gain varies from the case of the high-speed mode to that of the low-speed mode.

As mentioned above, in the present invention, a binary sum signal is held for a predetermined period of time; therefore a defect caused by the block prehead and contained the sum signal is completely corrected. Accordingly, a pure sum signal free from an influence of the block prehead can be caught, and an accurate speed and direction can be detected by use of this sum signal. Further, using the phase difference between sum and difference signals, the moving direction is detected, and the time required for detecting the speed detection is shortened to 1/4, thereby reducing the time delay. Thus, a stable speed control can be carried out, and a more accurate accessing operation can be performed.

Regarding the border value of each of speed regions, by making the border speed shifting from the low speed region to the high speed region, higher than that from the high speed region to the low speed region, so-called chattering of a detection speed mode, i.e. drastic mode shifting due to speed change occurring near the border speed region, can be prevented, stabilizing the speed control.

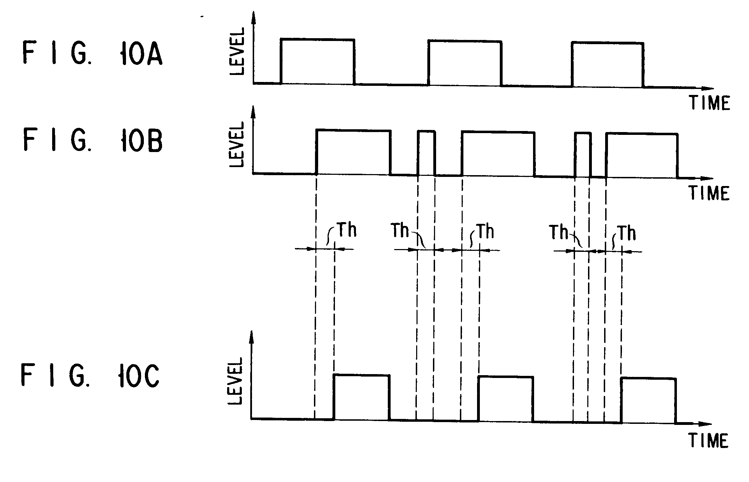

The present invention is not limited to the above-described embodiment, in which a sum signal correction circuit consists of a circuit for holding the level of a sum signal for the time period of 75% of the pulse width $T_{pp}$ of the binary difference signal immediately before the sum signal. The sum signal correction circuit may consist of a circuit for producing a new binary sum signal by sampling the original a certain period of time, time Th, after the rise or fall of the binary sum signal, where time Th is a time required (for a beam) to pass the block prehead, given in accordance with a type of an optical disk and the number of rotation of a disk per a period of time. As can be seen Figs. 10A to 10C, in the case where a time period for crossing a track is sufficiently longer than a block prehead passing time, defects caused by the block prehead can be completely corrected, and therefore sufficiently accurate speed and direction can be detected.

Further, for example, the low-speed mode described in connection with the above embodiment may be divided into two, i.e. very low, and mid-low speed modes, and, in the very low speed state, correction of the sum signals shown in Fig. 10A to 10C is carried out, whereas in the mid-low speed state, correction of the sum signals shown in Fig. 6A to 6B is carried out. In this alternative case, regarding the modes shown in Figs. 10A to 10C, the phase of the sum signal is delayed by a time period corresponding to the time to pass the block prehead due to correction, and the longer the time required for a beam to move from a track to a neighboring track, and the less the delay time of the phase, and therefore the more accurate the correction can be. In the meantime, regarding the modes shown in Figs. 6A to 6B, the smaller the variance in speed, the more accurate the correction can be. However, in the low speed region, the time required for reaching the neighboring track is long, and therefore the rate of change in speed while fixing a disturbance acceleration speed at constant is high, whereas in the mid-low speed region, the time required for reaching the neighboring track is short, and therefore the rate of change in speed while fixing a disturbance acceleration speed at constant is low. Therefore, in the very low speed state, the correction of a sum signal should be carried out in the mode shown in Figs. 10A to 10C, and in the mid-low speed state, the correction should be conducted in the mode shown in Figs. 6A and 6B. Thus, accuracy of the correction can be enhanced in every region.

In addition, by making the border speed shifting from the mid-low speed region to the high speed region, higher than that from the high speed region to the mid-low speed region, and by making the border speed shifting from the very low speed region to the mid-low speed region, higher than that from the mid-low speed region to the very low speed region, chattering of a detection speed mode occurring near the border speed region, can be prevented, thereby stabilizing the speed control.

As described above, according to the present invention, there is provided an optical data processing device in which an influence of the block prehead on a sum signal can be removed, achieving a highly accurate speed detection, and enabling an accurate accessing operation.

## Claims

1. A data processing device for processing data optically retrieved from a recording medium having a tracking guide on which prepits serving as address data are formed, characterized by comprising:

   focusing means (37) for focusing a light beam on a recording medium (11), and transmitting the light beam reflected on the recording medium (11);

   moving means (33, 51) for linearly moving the focusing means (37) such that the light beam output from the focusing means (37) crosses the tracking guide;

   detecting means (44) for detecting the light beam from the focusing means (37), the detecting means (44) including first and second detecting areas (44A, 44B, 44C, 44D), which generating first and second signals, respectively, arranged such that these areas (44A, 44B, 44C, 44D) are traversed by an image of tracking guide when the focusing means (37) is moved;

   subtracting and adding means (46) for generating a difference signal corresponding to a difference between the first and second signals, and a sum signal corresponding to a sum of the first and second;

   correcting means (19) for generating a correction sum signal obtained by correcting the sum signal in accordance with the difference signal, a level of this sum signal being held for a predetermined time period so as to mask components corresponding to the prepits contained in the sum signal; and

speed detecting means (22, 23, 24) for detecting a first moving speed in a low speed region where the focusing means (37) is moved at a low speed by the moving means (33, 51) in accordance with the difference signal and the corrected sum signal, and for detecting a second moving speed in a high-speed region where the focusing means (37) is moved at a relatively high speed by the moving means (33, 51) in accordance with the difference signal.

2. A data processing device according to claim 1, characterized by further comprising binary-conversion means (17, 18) for converting difference and sum signals output from the adding and subtracting means (46) into binary system, and supplying the obtained binary difference and sum signals to the correction means (19).

3. A data processing device according to claim 2, characterized by further comprising counting means (21) for counting the binary difference signals, and generating a count signal indicating the number of tracking guides which the light beam crossed.

4. A data processing device according to claim 3, characterized by further comprising instructing means (47) for instructing a moving condition appropriate for the number of tracking guides which the light beam crosses, this instruction means (47) and said counting means (21) each including a counter counting up or down the number of tracking guides to cross in accordance with the binary difference signals.

5. A data processing device according to claim 1, characterized in that said correcting means (19) includes first and second timing circuits for determining a holding time period based on the first and second moving speed signals output from the speed detecting means (22, 23, 24).

6. A data processing device according to claim 1, characterized in that said correcting means (19) includes first and second holding circuits (57, 58), said first holding circuit (57) holding a level of the corrected binary sum signal for a time period determined based on a variable pulse width of the binary difference signal when the moving speed detected by said speed detecting means (22, 23, 24) falls within the range of the low speed region, and said second holding circuit (58) holding a level of the corrected binary sum signal for a time period determined based on a substantially constant pulse width of the binary difference signal when the moving speed detected by said speed detecting means (22, 23, 24) falls within the range of the high speed region.

7. A data processing device according to claim 1, characterized by further comprising direction detecting means (20) for detecting a moving direction of said focusing means (37) by comparing the difference signal with the corrected sum signal.

8. A data processing device according to claim 2, characterized in that said speed detecting means (20) further comprises:

pulse generating means (22) for generating a first pulse upon rise or fall of the binary difference signal when the moving speed of said focusing means (37) falls within the low speed region and upon rise or fall of the binary sum signal, and generating a second pulse upon rise or fall of the binary difference signal when the moving speed of said focusing means (37) falls within the high speed region;

counting means (23) for counting first and second pulses, and generating first and second count pulses based on the counts of the first and second pulses; and

speed signal generating means (24) for generating first and second signals each corresponding to a respective moving speed, in response to the first and second count signals.

F I G. 1A

DIFFERENCE SIGNAL

BINARY LEVEL

TIME

F I G. 1B

LEVEL

Δt

TIME

F I G. 2A

SUM SIGNAL

I          I

TIME

F I G. 2B

LEVEL

II          II

TIME

F I G. 3

F I G. 4

FIG. 5A

FIG. 5B

FIG. 6A

FIG. 6B

FIG. 8A

FIG. 8B

BINARY
DIFFERENCE
SIGNAL

51

PULSE WIDTH
MEASURING
CIRCUIT

TPP

52

53

PULSE WIDTH
X 1/2

55

ADDER

TPP x 0.75

PULSE WIDTH
X 1/4

54

TIMER — 56

HOLD
CIRCUIT — 57

BINARY
SUM SIGNAL

61

62

CORRECTED BINARY
SUM SIGNAL

TIMER — 59

D      CK

FF

58

Q

SPEED SIGNAL

COMPARATOR — 60

F I G.  7

13

F I G. 9A

F I G. 9B

F I G. 9C

F I G. 9D

L1

L2

LEVEL

LEVEL

LEVEL

LEVEL

TIME

TIME

TIME

TIME

EP 0 514 773 A2

F I G. 10A

F I G. 10B

F I G. 10C

EP 0 514 773 A2